# EUROPÄISCHE PATENTSCHRIFT

(11) **EP 3 218 320 B1**
(45) Veröffentlichungstag und Bekanntmachung des Hinweises auf die Patenterteilung: **19.02.2020**
(21) Anmeldenummer: 15790858.3
(22) Anmeldetag: 20.10.2015
(51) Int. Cl.: C04B 7/12, C04B 20/04, B01J 6/00

(54) **VERFAHREN ZUR WÄRMEBEHANDLUNG VON NATÜRLICHEN TONEN UND/ODER ZEOLITHEN**
METHOD FOR THE HEAT TREATMENT OF NATURAL CLAYS AND/OR ZEOLITES
PROCÉDÉ DE TRAITEMENT THERMIQUE D'ARGILES ET/OU DE ZÉOLITES NATURELLES

(30) Priorität: 10.11.2014 DE 102014116373
(43) Veröffentlichungstag der Anmeldung: 20.09.2017
(73) Patentinhaber: thyssenkrupp Industrial Solutions AG, 45143 Essen (DE); thyssenkrupp AG, 45143 Essen (DE)
(72) Erfinder: LEMKE, Jost, 59320 Ennigerloh (DE); BERGER, Claudia, 59320 Ennigerloh (DE); ROHLOFF, Kathrin, 20457 Hamburg (DE); GRUND, Guido, 59457 Werl (DE)
(74) Vertreter: thyssenkrupp Intellectual Property GmbH
(86) Internationale Anmeldenummer: PCT/EP2015/074203
(87) Internationale Veröffentlichungsnummer: WO 2016/074887

(56) Entgegenhaltungen:
- DE-A1-102011 014 498
- US-A- 3 941 872

## Beschreibung

Die Erfindung betrifft ein Verfahren zur Wärmebehandlung von natürlichen Tonen und/oder Zeolithen, wobei der Ton und/oder der Zeolith in einer Calcinierzone zumindest teilweise calciniert und anschließend in einer Kühlzone abgekühlt wird.

Vor dem Hintergrund der globalen Minderung der CO₂-Emissionen rücken Stoffe, die zur Festigkeitsentwicklung im Beton beitragen und bei deren Herstellung weniger CO₂ als in Zementklinkerbrennprozess freigesetzt wird, immer mehr in den Fokus. Natürliche Tone und/oder Zeolithe, welche einer thermischen Behandlung (Calcination) unterzogen werden, scheinen hierbei ein vielversprechendes Potenzial zu besitzen.

So ist aus der DE 10 2008 020 600 A1 ein Verfahren zur Calcinierung von Ton oder Gips bekannt, wobei die Feststoffe durch einen Flash-Reaktor hindurch geführt werden, in welchem sie bei einer Temperatur von 450 bis 1500°C mit heißen Gasen in Kontakt gebracht werden. Die Feststoffe werden anschließend bei einer Temperatur von 500 bis 850°C durch einen Verweilzeitreaktor geführt und dann ggf. einer weiteren Behandlungsstufe zugeführt.

Natürlich vorkommende Tone sind meist eisenreich, sodass es bei der herkömmlichen Calcinierung zu einer rötlichen Verfärbung des Produktes kommt. Diese Färbung ist zwar für die Festigkeit nicht relevant, wird aber von Anlagenbetreibern und Baustoffkunden als unerwünscht eingestuft. Nach derzeitigem Stand hängt das Marktpotenzial der calcinierten Tone aber wesentlich von deren Farbe ab.

In der US 3 941 872 A wird Ton zunächst unter reduzierenden und anschließend unter oxidieren Bedingungen wärmebehandelt, um kalzinierten Ton mit einer gewünschten Helligkeit herzustellen.

Die DE 10 2011 014 498 A1 offenbart ein Verfahren zur Herstellung eines Klinkerersatzstoffes für die Verwendung bei der Zementherstellung, wobei ein auf eine Korngröße von < 2 mm zerkleinerter Ton zunächst bei einer Temperatur von 600 bis 1.000°C kalziniert wird. Durch eine anschließende reduzierende Behandlung bei Temperaturen von 600 bis 1.000°C mit einem CO-haltigen Gas erfolgt eine Umfärbung des roten, kalzinierten Tons in grauen kalzinierten Ton.

In der WO 2012/082683 A1 hat man sich zur Aufgabe gestellt, synthetische Puzzolane mit gewünschten Farbeigenschaften, insbesondere einem leichten Grauton, herzustellen. Als Lösung wird angegeben, dass ein Rohmaterial, welches zur Bildung eines amorphen Aluminiumsilikats geeignet ist, bis zu einer Aktivierungstemperatur erwärmt wird, bei der das Rohmaterial in synthetisches Puzzolan umgewandelt wird. Anschließend wird das synthetische Puzzolan von der Aktivierungstemperatur bis auf einer Temperatur abgekühlt, bei der es farbstabil ist. Dieser Abkühlprozess findet dabei zumindest zu Teilen unter reduzierenden Bedingungen statt. Als Ergebnis erhält man dann ein Puzzolan mit dem gewünschten Grauton.

Der Erfindung liegt nun die Aufgabe zugrunde, ein Verfahren zur Wärmebehandlung von natürlichen Tonen und/oder Zeolithen anzugeben, bei dem der Aufwand zur Realisierung eines grauen Farbtons reduziert wird.

Erfindungsgemäß wird diese Aufgabe durch die Merkmale des Anspruches 1 gelöst, indem der Ton und/oder der Zeolith in der Calcinierzone in einem Flugstromcalcinator oder in einer Wirbelschicht in einem Temperarturbereich von 600 bis 1050°C unter reduzierenden Bedingungen calciniert wird, wobei während der Calcination unter reduzierenden Bedingungen eine zumindest teilweise Reduktion von rötlich färbendem dreiwertigen Eisen auf zweiwertiges Eisen stattfindet und der unter reduzierenden Bedingungen calcinierte Ton und/oder Zeolith anschließend in einer Kühlzone (3, 3') abgekühlt wird.

Etwaiges im Ausgangsmaterial vorhandenes zweiwertiges Eisen verbleibt dabei in dieser Wertigkeitsstufe. Die Calcination in der Calcinierzone sollte dabei möglichst vollständig, vorzugsweise zu wenigstens 80%, höchstvorzugsweise zu wenigstens 90% ablaufen.

Während beim Stand der Technik die Calcinierung des Ausgangsmaterials immer unter oxidierenden Bedingungen durchgeführt wurde, schlägt die Erfindung nun eine unter reduzierenden Bedingungen betriebene Calcinierzone vor. Dies hat den Vorteil, dass das im natürlich verkommenden Ton bereits vorhandenes zweiwertige Eisen, welches die gewünschte graue Farbwirkung hat, nicht erst durch die Calcination in dreiwertiges Eisen mit rötlichem Erscheinungsbild umgewandelt wird, um es anschließend bei der Kühlung unter reduzierenden Bedingungen wieder in zweiwertiges Eisen zu reduzieren. Es findet somit bereits während der Calcination unter reduzierenden Bedingungen eine Reduktion des rötlich färbenden dreiwertigen Eisens auf das zweiwertige Eisen statt. Dies verringert die für die Reduktion des dreiwertigen Eisens erforderliche Menge an Reduktionsmittel.

Im Stand der Technik wird die reduzierende Behandlungsstufe, wenn sie nicht, wie in der WO 2012/082683 A1 in der Kühlstufe durchgeführt wird, durch ein zusätzliches Aggregat gebildet. Dies verursacht entsprechende Investitions- und Wartungskosten und beansprucht zusätzlichen Platz. Durch die erfindungsgemäße Lösung kann auf ein solches zusätzliches Aggregat verzichtet werden. Auch die Kühlstufe kann in ihrer Größe entsprechend verringert werden, da die Verweilzeit des zu kühlenden Gutes deutlich verringert werden kann, wenn nicht neben der Kühlung auch noch die Umwandlung des dreiwertigen Eisens in zweiwertiges Eisen erfolgen muss. Die beiden Reaktionen, die Calcination der Tonmineralphasen und die Reduktion des Eisens, erfolgen erfindungsgemäß in ein und demselben Reaktor, nämlich in der Calcinierzone. Die Bündelung dieser beiden Prozessschritte in einem Aggregat hat zudem den Vorteil, dass die erforderliche Wärme gleich beiden Reaktionen zur Verfügung steht und der nachgeschaltete Kühler bei einem insgesamt niedrigeren Temperaturniveau betrieben werden kann.

Bei der Behandlung im Flugstromcalcinator sind die zu behandelnden Partikel nahezu vollständig mit Gas umgeben, während die Behandlung in einer Wirbelschicht eher einer gasdurchströmten, aufgelockerten Schüttung ähnelt. Die Calcination im Flugstrom(reaktor) hat gegenüber einer Wirbelschicht den Vorteil einer größeren Unempfindlichkeit gegenüber der Korngrößenverteilung. So dürfen im Flugstrom wesentlich feinere Partikel vorhanden sein, die trotzdem in dem Gas-Gleichstrom mitgenommen werden. Bei der Wirbelschicht kommt es dagegen zu einem sofortigen Austrag der Feinstpartikel, welche in einem Filter aufgefangen und zur weiteren Calcination wieder zurückgeführt werden müssen.

Weitere Ausgestaltungen der Erfindung sind Gegenstand der Unteransprüche.

Der Ton wird vorzugsweise in einem Flugstromcalcinator mit einer Verweilzeit von weniger als 5 s, vorzugsweise weniger als 3 s calciniert. Erfolgt die Calcination in einem Wirbelbett, werden Verweilzeiten von weniger als 60 s, vorzugsweise weniger als 40 s und höchstvorzugsweise weniger als 30 s bevorzugt. Diese beiden Aggregate (Flugstromcalcinator oder Wirbelschicht) ermöglichen einen sehr innigen Kontakt mit den heißen Gasen, wodurch eine schnelle und effiziente Calcination und Reduktion erreicht werden kann. Gemäß einer weiteren Ausgestaltung der Erfindung können die reduzierenden Bedingungen in der Calcinierzone durch Einführung von Abgasen aus einer unterstöchiometrischen Verbrennung von Brennstoffen hergestellt werden. Auf diese Weise lassen sich unerwünschte, material- und anlagenschädliche Temperaturspitzen und auch eine schädliche Flammenbildung auf einfache Art und Weise vermeiden.

Die Calcinierzone wird zwischen einer Aufgabestelle, wo der Ton oder der Zeolith der Calcinierzone aufgegeben wird, und einer Abführstelle, wo der zumindest teilweise calcinierte Ton oder Zeolith ausgeschleust wird, zweckmäßigerweise mit für das zu behandelnde Material kontrolliert sauerstoffarmen Bedingungen in der Gasphase von weniger als 2%, vorzugsweise weniger als 1%, höchstvorzugsweise weniger 0,1% Restsauerstoff und einer Konzentration reduktionsfähiger Gase (beispielsweise CO oder H₂) im Bereich von 0,2% bis 50%, vorzugsweise 2% bis 20%, höchstvorzugsweise 4% bis 10% betrieben. Dabei kann insbesondere die Konzentration reduktionsfähiger Gase im Bereich der Aufgabestelle höher als die an der Abführstelle sein. So kann vorteilhafter an der Aufgabestelle eine Gaskonzentration reduktionsfähiger Gase im Bereich von 2% bis 50%, vorzugsweise 5% bis 40%, höchstvorzugsweise 10% bis 35% eingestellt werden.

Zwischen der Aufgabestelle und der Abführstelle kann an wenigstens einer Stelle, vorzugsweise an mehreren Stellen Verbrennungsluft und/oder Brennstoff zugeführt werden. Auf diese Weise kann eine gewünschte Temperaturverteilung über die gesamte Calcinierzone eingestellt werden. Wird der Brennstoff direkt der Calcinierzone zugeführt ist darauf zu achten, dass die Oxidation des Brennstoffs unter Vermeidung einer Flammenbildung erfolgt. Außerdem kann durch eine vorteilhafte Gasführung, beispielsweise durch einen Drall, die Strömung derart gelenkt werden, dass eine sich eventuell ausbildende Flamme immer wieder abreißt.

Die anschließende Kühlung des Tons oder der Zeolithe in der Kühlzone erfolgt unter für den Ton oder Zeolith kontrolliert sauerstoffarmen, vorzugsweise sauerstofffreien Bedingungen. Nach den Bedingungen in der Calcinierzone kann es ausreichend sein, wenn die Kühlzone unter inerten Bedingungen betrieben wird, ansonsten wird eine reduzierende Bedingung bevorzugt. Nachdem in der Calcinierzone sowohl die Calcination der Tonmineralphasen als auch die Reduktion des Eisens erfolgt, dient die Atmosphäre in der anschließenden Kühlzone lediglich dazu, die gebildeten Phasen aufrechtzuerhalten, bis das kritische Temperaturfenster, bei dem es zu einer Rückreaktion kommen kann, durchschritten ist. Dies sollte üblicherweise bei einer Temperatur < 250°C der Fall sein. Nachdem die Reduktion des Eisens im Wesentlichen in der Calcinierzone erfolgt, kann die nachfolgende Kühlzone bei einem insgesamt niedrigeren Temperaturniveau betrieben werden.

Für die Kühlzone kommt beispielsweise ein Wirbelbett, ein Fließbettkühler, ein indirekt gekühltes System oder eine Kombination derartiger Kühler als Kühlaggregat in Betracht. Um die Verweilzeit des Tons oder des Zeoliths in der Calcinierzone zu verkürzen, ist es vorteilhaft, wenn das Ausgangsmaterial vor der Wärmebehandlung in der Calcinierzone vorgewärmt wird, was beispielsweise mit den Abgasen der Calcinierzone und/oder der Kühlzone oder aus einem anderen Prozessschritt des Gesamtprozesses erfolgen könnte.

Gemäß einer besonderen Ausgestaltung der Erfindung findet zumindest die Calcination und die Kühlung, und ggf. auch eine entsprechend Vorwärmung, in ein und demselben Aggregat, beispielsweise einen Wanderbettreaktor statt.

Die Erfindung wird im Folgenden anhand der Beschreibung einiger Ausführungsbeispiele und der Zeichnung näher erläutert.

In der Zeichnung zeigen
- Fig. 1: eine schematische Darstellung einer Anlage zur Wärmebehandlung von natürlichen Tonen und/oder Zeolithen gemäß einem ersten Ausführungsbeispiel und
- Fig. 2: eine schematische Darstellung einer Anlage zur Wärmebehandlung von natürlichen Tonen und/oder Zeolithen gemäß einem zweiten Ausführungsbeispiel.

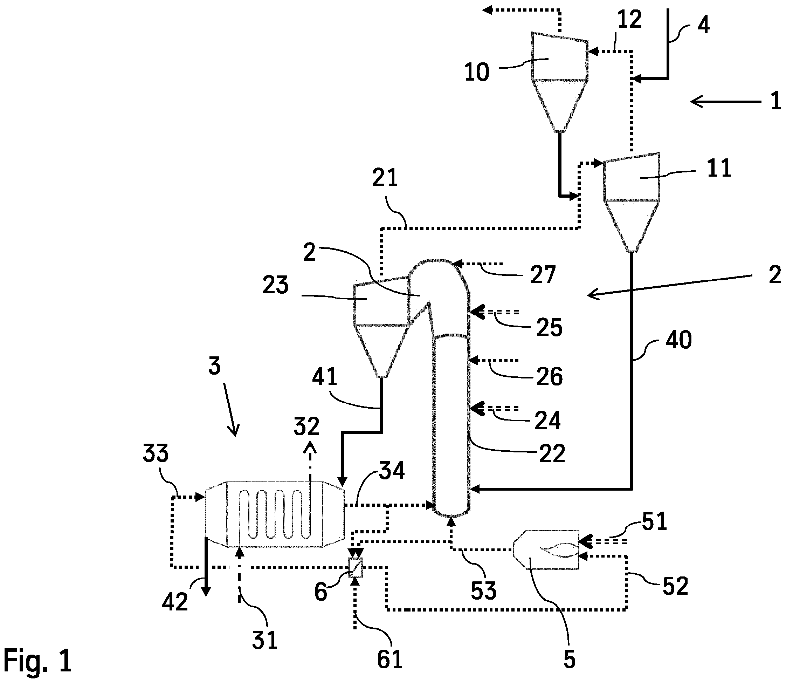

Die in Fig. 1 dargestellte Anlage zur Wärmebehandlung von natürlichen Tonen und/oder Zeolithen besteht im Wesentlichen aus einer Vorwärmzone 1, einer Calcinierzone 2 und einer Kühlzone 3. Die Vorwärmzone 1 ist hier als zweistufiger Zyklonvorwärmer mit einem ersten und einem zweiten Zyklon 10, 11 ausgebildet. Ein zu behandelndes Rohmaterial 4, bei dem es sich beispielsweise um eisenhaltigen Ton handelt, wird in das vom zweiten Zyklon 11 zum ersten Zyklon 10 strömende Abgas 12 eingeführt. Im ersten Zyklon 10 wird das Material vom Gas getrennt und einem von der Calcinierzone 2 zum zweiten Zyklon 11 geführten Abgas 21 zugegeben. Im zweiten Zyklon 11 findet wiederum eine Trennung in Abgas 12 und vorgewärmtes Rohmaterial 40 statt. Das Rohmaterial 4 wird somit in der Vorwärmzone 1 mit den Abgasen der Calcinierzone 2 vorgewärmt, um dann als vorgewärmtes Rohmaterial 40 der Calcinierzone 2 zugeführt zu werden. Die Calcinierzone 2 wird beispielsweise durch einen als Steigrohr ausgebildeten Flugstromcalcinator 22 mit anschließendem Abscheider 23 gebildet.

Die Energiezufuhr für den Flugstromcalcinator 22 erfolgt im dargestellten Ausführungsbeispiel im Wesentlichen über ein Verbrennungsaggregat 5 zur Erzeugung von Abgasen 53 durch eine unterstöchiometrische Verbrennung von Brennstoff 51 und vorgewärmter Verbrennungsluft 52. Weiterhin kann dem Flugstromcalcinator 22 in ein oder mehreren Ebenen Brennstoff oder reduzierendes Heißgases über Aufgabenstellen 24, 25 zugegeben werden. In entsprechender Weise können auch Aufgabestellen 26, 27 für zusätzliche Verbrennungsluft vorgesehen werden. Die Calcinierzone 2 wird zumindest so betrieben, dass sich reduzierende Bedingungen einstellen. Dabei ist es insbesondere vorteilhaft, wenn der Restsauerstoffgehalt in der Gasphase weniger als 2% beträgt und die Konzentration reduktionsfähiger Gase (wie CO bzw. H2) im Bereich von 0,2% bis 50% liegt.

Im anschließenden Abscheider 23 wird das Abgas 21 vom calcinierten Material 41 getrennt, wobei das calcinierte Material 41 mit einer Temperatur im Bereich von 800 bis < 900°C in die Kühlzone 3 gelangt, die ebenfalls reduzierend oder wenigstens inert betrieben wird. Im dargestellten Ausführungsbeispiel ist die Kühlzone 3 als Fließbettkühler mit indirekter Wasserkühlung ausgebildet, die einen Kühlwassereintritt 31 und einen Kühlwasseraustritt 32 umfasst. Über einen nicht näher dargestellten Wärmetauscher kann für das verwendete Kühlwasser eine Kreislaufführung vorgesehen werden. Weiterhin wird der Kühlzone ein kaltes Fließbettfluidisierungsgas 33 zugeführt, wobei das erwärmte Fließbettfluidisierungsgas 34 zweckmäßigerweise über einen Wärmetauscher 6 geführt wird, um es nach Abkühlung wieder als kaltes Fließbettfluidisierungsgas 33 der Kühlzone zuzuführen. Das Fluidisierungsgas 33 kann teilweise auch durch einen Teil der reduzierenden Abgase 53 des Verbrennungsaggregates 5 gebildet werden. Der Wärmetauscher 6 wird mit kalter Luft 61 betrieben, die dann nach Erwärmung als vorgewärmte Verbrennungsluft 52 im Verbrennungsaggregat 5 eingesetzt wird.

Wird das Fließbettfluidisierungsgas mit einem Teil des Abgases 53 des Verbrennungsaggregates 5 ergänzt, kann zum Ausgleich ein Teil des erwärmten Fließbettfluidisierungsgases 34 auch in die Calcinierzone 2 eingeführt werden. Am Ende der Kühlzone 3 wird das unter 250 C° abgekühlte Fertigprodukt 42 abgeführt.

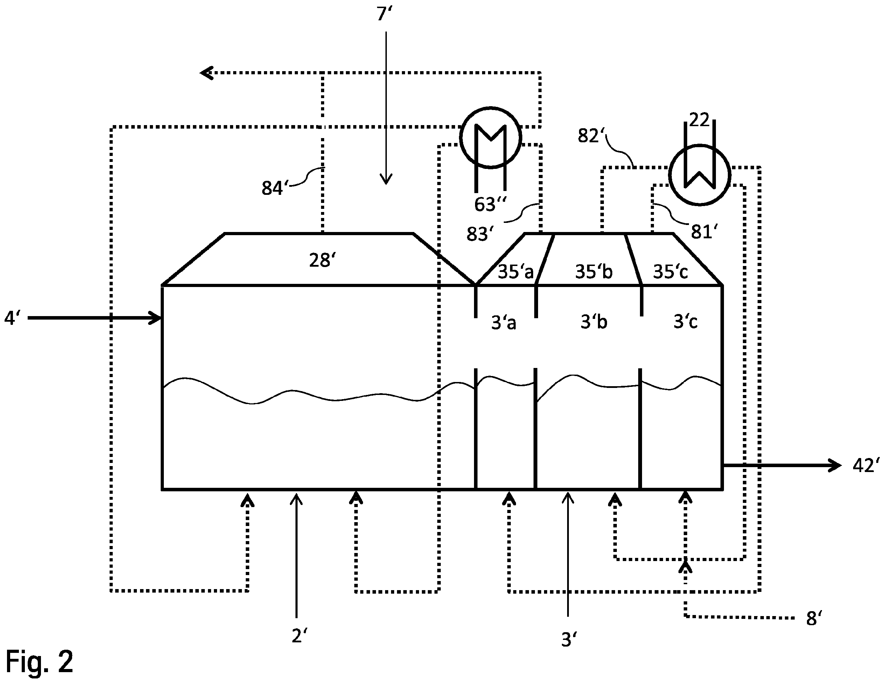

Fig. 2 zeigt ein weiteres Ausführungsbeispiel für eine Anlage zur Wärmebehandlung von natürlichen Tonen und/oder Zeolithen. Die Besonderheit besteht hierbei darin, dass die Calcinierzone 2' und die Kühlzone 3' in einem gemeinsamen, als Wanderbettreaktor 7' ausgebildeten Aggregat untergebracht sind. Dabei ist es durchaus denkbar, dass zusätzlich auch eine Vorwärmzone am Anfang des Wanderbettreaktors vorgesehen wird. Das zu behandelnde Rohmaterial 4', bei dem es sich beispielsweise wiederum um eisenhaltigen Ton oder Zeolith handelt, wird dem Wanderbettreaktor 7' am einen Ende aufgegeben, durchwandert die Calcinierzone 2' und anschließend die Kühlzone 3' und wird als Fertigprodukt 42' abgezogen.

Auch bei diesem Ausführungsbeispiel wird die Calcinierzone unter reduzierenden Bedingungen betrieben und auch in der Kühlzone 3' findet eine inerte oder reduzierende Kühlung statt. Hierzu ist die Kühlzone 3' in drei Abschnitte 3'a, 3'b, 3'c unterteilt, die von dem zu kühlende Material nacheinander durchwandert werden. Der letzte Abschnitt 3'c wird mit einem reduzierenden Kühlgas 8' zur letzten Kühlung des Materials beaufschlagt. Im oberen Bereich der Kühlzone 3 sind für jeden Abschnitt zugeordnete Gasabzugsmittel 35'a, 35'b, 35'c vorgesehen. So wird das im Abschnitt 3'c zugeführte, reduzierende Kühlgas 8' als erwärmtes Kühlgas 81' über die Gasabzugsmittel 35'c abgezogen, in einem Wärmetauscher 62' abgekühlt und nachfolgend dem zweiten Abschnitt 35'b der Kühlzone 3' zugeführt. Das dort über die Gasabzugsmittel 35'b abgezogene Kühlgas 82' wird wiederum im Wärmetauscher 62' abgekühlt und dem ersten Kühlabschnitt 3'a der Kühlzone 3' zugeführt. Die über die Gasabzugsmittel 35'a abgezogene Kühlerabluft 83' wird in einem Wärmetauscher 63' abermals gekühlt und der Calcinierzone 2' zugeführt. Das Abgas 84' der Calcinierzone 2' wird über Gasabzugsmittel 28' abgezogen und ggf. zumindest teilweise über den Wärmetauscher 63' nochmals der Calcinierzone 2' aufgegeben.

Einen der der Erfindung zugrundeliegenden Versuche hat man mit einem eisenhaltigen Ton (Illit) als Ausgangsmaterial durchgeführt. Dieser Ton enthielt etwa 4% Eisen, wobei 85% des enthaltenden Eisens in dreiwertiger und 15% in zweiwertiger Form vorlagen. Bei einem zunächst durchgeführten Vergleichsversuch mit einer oxidierenden Calcination hat sich der Anteil des rotfärbenden, dreiwertigen Eisens auf 94% erhöht, während sich der die graue Farbgebung bewirkende zweiwertige Eisenanteil auf 6% reduziert hat. Bei einer nachfolgenden Behandlung unter reduzierenden Bedingungen bei 700° fand eine Umwandlung des dreiwertigen Eisens in zweiwertigen Eisens statt, sodass der Anteil des dreiwertigen Eisens auf akzeptable 62% reduziert wurde.

Bei dem erfindungsgemäßen Verfahren, bei dem die Oxidation gleich unter reduzierenden Bedingungen stattfindet, findet erst gar keine Erhöhung des dreiwertigen Eisenanteils im Ausgangsmaterial statt. Vielmehr kann bereits bei der Calcination eine Umwandlung des dreiwertigen Eisens in zweiwertiges Eisen erreicht werden, sodass bereits nach der Calcination der Anteil des dreiwertigen Eisens auf den gewünschten Wert von beispielsweise 62% reduziert ist.

## Patentansprüche

1. Verfahren zur Wärmebehandlung von natürlichen Tonen und/oder Zeolithen, wobei der Ton und/oder der Zeolith, in der Calcinierzone (2, 2') in einem Flugstromcalcinator oder einer Wirbelschicht in einem Temperaturbereich von 600 bis 1050°C unter reduzierenden Bedingungen calciniert wird, wobei während der Calcination unter reduzierenden Bedingungen eine Reduktion von rötlich färbendem dreiwertigen Eisen auf zweiwertiges Eisen stattfindet und der unter reduzierenden Bedingungen calcinierte Ton und/oder Zeolith anschließend in einer Kühlzone (3, 3') abgekühlt wird.

2. Verfahren nach Anspruch 1, **dadurch gekennzeichnet, dass** die Calcination im Flugstromcalcinator mit einer Verweilzeit von weniger als 3 s erfolgt.

3. Verfahren nach Anspruch 1, **dadurch gekennzeichnet, dass** die Calcination in der Wirbelschicht mit einer Verweilzeit von weniger als 60 s erfolgt.

4. Verfahren nach Anspruch 1, **dadurch gekennzeichnet, dass** während der Calcination unter reduzierenden Bedingungen im Ausgangsmaterial vorhandenes zweiwertiges Eisen in dieser Wertigkeitsstufe verbleibt.

5. Verfahren nach Anspruch 1, **dadurch gekennzeichnet, dass** die reduzierenden Bedingungen in der Calcinierzone (2, 2') durch Einführung von Abgasen aus einer unterstöchiometrischen Verbrennung von Brennstoffen hergestellt werden.

6. Verfahren nach Anspruch 1, **dadurch gekennzeichnet, dass** die Calcinierzone (2, 2') zwischen einer Aufgabestelle, wo der Ton oder der Zeolith der Calcinierzone aufgeben wird, und einer Abführstelle, wo der zumindest teilweise calcinierte Ton oder Zeolith ausgeschleust wird, mit für das zu behandelnde Material kontrolliert sauerstoffarmen Bedingungen in der Gasphase von weniger als 2 % Restsauerstoff und einer Konzentration reduktionsfähiger Gase im Bereich von 0,2 % bis 50 % betrieben wird.

7. Verfahren nach Anspruch 5, **dadurch gekennzeichnet, dass** die Konzentration reduktionsfähiger Gase im Bereich der Aufgabestelle höher als die an der Abführstelle ist.

8. Verfahren nach Anspruch 5, **dadurch gekennzeichnet, dass** an der Aufgabestelle eine Gaskonzentration reduktionsfähiger Gase im Bereich von 2 % bis 50 % eingestellt wird.

9. Verfahren nach Anspruch 5, **dadurch gekennzeichnet, dass** an der Abführstellestelle eine Gaskonzentration reduktionsfähiger Gase im Bereich von 0,2 % bis 7 %, vorzugsweise 0,2 % bis 2 % eingestellt wird.

10. Verfahren nach Anspruch 5, **dadurch gekennzeichnet, dass** zwischen der Aufgabestelle und der Abführstelle an wenigstens einer Stelle Verbrennungsluft und/oder Brennstoff zugeführt wird.

11. Verfahren nach Anspruch 1, **dadurch gekennzeichnet, dass** der Calcinierzone (2, 2') Brennstoff zugeführt wird und die Oxidation des Brennstoffs unter Vermeidung einer Flammenbildung erfolgt.

12. Verfahren nach Anspruch 1, **dadurch gekennzeichnet, dass** der Ton oder der Zeolith in der Kühlzone (3, 3') unter für den Ton oder Zeolith kontrolliert sauerstoffarmen Bedingungen abgekühlt wird.

13. Verfahren nach Anspruch 1, **dadurch gekennzeichnet, dass** der Ton oder der Zeolith in der Kühlzone (3, 3') unter inerten Bedingungen abgekühlt wird.

14. Verfahren nach Anspruch 1, **dadurch gekennzeichnet, dass** der Ton oder der Zeolith in der Kühlzone (3, 3') unter für den Ton oder den Zeolith kontrolliert reduzierenden Bedingungen abgekühlt wird.

15. Verfahren nach Anspruch 1, **dadurch gekennzeichnet, dass** in der Kühlzone (3, 3') ein Wirbelbett, ein Fließbettkühler oder ein indirekt gekühltes System als Kühlaggregat verwendet wird.

16. Verfahren nach Anspruch 1, **dadurch gekennzeichnet, dass** der Ton oder der Zeolith vor der Wärmebehandlung in der Calcinierzone (2, 2') mit den Abgasen der Calcinierzone (2, 2') und/oder der Kühlzone (3, 3') oder aus einem anderen Prozessschritt eines Gesamtprozesses vorgewärmt wird.

## Claims

1. Method of heat treatment of natural clays and/or zeolites, wherein the clay and/or the zeolite is calcined under reducing conditions in the calcining zone (2, 2') in an entrained flow calciner or a fluidized bed within a temperature range from 600 to 1050°C, wherein a reduction of reddish-colored trivalent iron to divalent iron takes place under reducing conditions during the calcination and the clay and/or zeolite calcined under reducing conditions is then cooled down in a cooling zone (3, 3').

2. Method according to Claim 1, **characterized in that** the calcination in the entrained flow calciner proceeds with a dwell time of less than 3 s.

3. Method according to Claim 1, **characterized in that** the calcination in the fluidized bed proceeds with a dwell time of less than 60 s.

4. Method according to Claim 1, **characterized in that** divalent iron present in the starting material remains **in that** valence state during the calcination under reducing conditions.

5. Method according to Claim 1, **characterized in that** the reducing conditions in the calcining zone (2, 2') are established by introducing offgases from a substoichiometric combustion of fuels.

6. Method according to Claim 1, **characterized in that** the calcining zone (2, 2') is operated between an addition point where the clay or the zeolite is added to the calcining zone, and a removal point where the at least partly calcined clay or zeolite is discharged, with controlled low-oxygen conditions in the gas phase for the material to be treated of less than 2% residual oxygen and a concentration of reductive gases in the range from 0.2% to 50%.

7. Method according to Claim 5, **characterized in that** the concentration of reductive gases in the region of the addition point is higher than at the removal point.

8. Method according to Claim 5, **characterized in that** a gas concentration of reductive gases in the range from 2% to 50% is established at the addition point.

9. Method according to Claim 5, **characterized in that** a gas concentration of reductive gases in the range from 0.2% to 7%, preferably 0.2% to 2%, is established at the removal point.

10. Method according to Claim 5, **characterized in that** combustion air and/or fuel is supplied at least one point between the addition site and the removal site.

11. Method according to Claim 1, **characterized in that** the calcining zone (2, 2') is supplied with fuel and the fuel is oxidized with avoidance of flame formation.

12. Method according to Claim 1, **characterized in that** the clay or the zeolite is cooled down in the cooling zone (3, 3') under controlled low-oxygen conditions in the gas phase for the clay or zeolite.

13. Method according to Claim 1, **characterized in that** the clay or the zeolite is cooled down in the cooling zone (3, 3') under inert conditions.

14. Method according to Claim 1, **characterized in that** the clay or the zeolite is cooled down in the cooling zone (3, 3') under controlled reducing conditions for the clay or the zeolite.

15. Method according to Claim 1, **characterized in that** a fluidized bed, a fluidized bed cooler or an indirectly cooled system is used as the cooling unit in the cooling zone (3, 3').

16. Method according to Claim 1, **characterized in that** the clay or the zeolite, prior to the heat treatment in the calcining zone (2, 2'), is preheated with the offgases from the calcining zone (2, 2') and/or from the cooling zone (3, 3') or from another process step in an overall process.

## Revendications

1. Procédé de traitement thermique d'argiles et/ou de zéolithes naturelles, l'argile et/ou la zéolithe étant calcinées dans la zone de calcination (2, 2') dans un calcinateur à courant entraîné ou un lit fluidisé dans une plage de température allant de 600 à 1 050 °C dans des conditions réductrices, une réduction de fer trivalent de couleur rougeâtre en fer bivalent ayant lieu pendant la calcination en conditions réductrices, et l'argile et/ou la zéolithe calcinées en conditions réductrices étant ensuite refroidies dans une zone de refroidissement (3, 3').

2. Procédé selon la revendication 1, **caractérisé en ce que** la calcination dans le calcinateur à courant entraîné a lieu avec un temps de séjour de moins de 3 s.

3. Procédé selon la revendication 1, **caractérisé en ce que** la calcination dans le lit fluidisé a lieu avec un temps de séjour de moins de 60 s.

4. Procédé selon la revendication 1, **caractérisé en ce que** le fer bivalent présent dans le matériau de départ reste à ce niveau de valence pendant la calcination en conditions réductrices.

5. Procédé selon la revendication 1, **caractérisé en ce que** les conditions réductrices dans la zone de calcination (2, 2') sont créées par introduction de gaz d'échappement issus d'une combustion sous-stœchiométrique de combustibles.

6. Procédé selon la revendication 1, **caractérisé en ce que** la zone de calcination (2, 2') est exploitée entre un emplacement d'ajout, où l'argile ou la zéolithe est introduite dans la zone de calcination, et un emplacement de déchargement, où l'argile ou la zéolithe au moins partiellement calcinée est évacuée, avec des conditions pauvres en oxygène contrôlées pour le matériau à traiter dans la phase gazeuse de moins de 2 % d'oxygène résiduel et une concentration en gaz aptes à la réduction dans la plage allant de 0,2 % à 50 %.

7. Procédé selon la revendication 5, **caractérisé en ce que** la concentration en gaz aptes à la réduction dans la zone de l'emplacement d'ajout est supérieure à celle à l'emplacement de déchargement.

8. Procédé selon la revendication 5, **caractérisé en ce qu'**une concentration en gaz aptes à la réduction dans la plage allant de 2 % à 50 % est ajustée à l'emplacement d'ajout.

9. Procédé selon la revendication 5, **caractérisé en ce qu'**une concentration en gaz aptes à la réduction dans la plage allant de 0,2 % à 7 %, de préférence de 0,2 % à 2 %, est ajustée à l'emplacement de déchargement.

10. Procédé selon la revendication 5, **caractérisé en ce que** de l'air de combustion et/ou un combustible sont introduits à au moins un emplacement entre l'emplacement d'ajout et l'emplacement de déchargement.

11. Procédé selon la revendication 1, **caractérisé en ce qu'**un combustible est introduit dans la zone de calcination (2, 2') et l'oxydation du combustible a lieu en évitant la formation d'une flamme.

12. Procédé selon la revendication 1, **caractérisé en ce que** l'argile ou la zéolithe est refroidie dans la zone de refroidissement (3, 3') dans des conditions pauvres en oxygène contrôlées pour l'argile ou la zéolithe.

13. Procédé selon la revendication 1, **caractérisé en ce que** l'argile ou la zéolithe est refroidie dans la zone de refroidissement (3, 3') dans des conditions inertes.

14. Procédé selon la revendication 1, **caractérisé en ce que** l'argile ou la zéolithe est refroidie dans la zone de refroidissement (3, 3') dans des conditions réductrices contrôlées pour l'argile ou la zéolithe.

15. Procédé selon la revendication 1, **caractérisé en ce qu'**un lit fluidisé, un refroidisseur à lit fluidisé ou un système refroidi indirectement est utilisé dans la zone de refroidissement (3, 3') en tant qu'appareil de refroidissement.

16. Procédé selon la revendication 1, **caractérisé en ce que** l'argile ou la zéolithe est préchauffée avant le traitement thermique dans la zone de calcination (2, 2') avec les gaz d'échappement de la zone de calcination (2, 2') et/ou de la zone de refroidissement (3, 3') ou d'une autre étape de procédé d'un procédé global.
